# EUROPEAN PATENT APPLICATION

(11) **EP 4 726 524 A1**
(43) Date of publication of application: **15.04.2026**
(21) Application number: 25207936.3
(22) Date of filing: 10.10.2025
(51) Int. Cl.: G06F 3/06, G06F 16/16, G06F 16/182

(54) **ENABLING DATA ACCESS TO CLOUD STORAGE SYSTEMS THROUGH HETEROGENEOUS INTERFACES**

(30) Priority: 11.10.2024 US 202418913360
(71) Applicant: Microsoft Technology Licensing, LLC, Redmond, WA 98052-6399 (US)
(72) Inventor: Ramiah, Narasimman, Redmond 98052 (US); Srivatsa, Sharan, Redmond 98052 (US); Manda, Nikhil, Redmond 98052 (US); Olson, Trevor Lee, Redmond 98052 (US); Chavva, Anusha, Redmond 98052 (US); Tiwari, Anunay, Redmond 98052 (US); Kavuri, Ajay Krishna Teja, Redmond 98052 (US); Nemani, Srinivasa Sankar, Redmond 98052 (US); Szyperski, Clemens, Redmond 98052 (US)
(74) Representative: Grünecker Patent- und Rechtsanwälte PartG mbB

(57) **Abstract**

According to examples, an adapter apparatus that enables the transformation of messages, based on storage hierarchies of different cloud storage systems in a heterogenous 5 cloud environment is disclosed. The adapter apparatus is included in a native cloud storage system and transforms messages from an external cloud storage system for execution on the native cloud storage system based on the native storage hierarchy. Similarly, the messages originating at the native cloud storage system are transformed for execution on the external cloud storage system based on the external storage hierarchy. A set of stored adapters 10 including a user-defined adapter, a catalog-based adapter and a model-based adapter enable
the conversion. Various virtualization functions including cache control, virtualization of properties, and leases are also enabled by the transformations.

## Description

### BACKGROUND

Digital information or data is stored on storage media, for various purposes, including current and future operations and archival purposes. While different types of storage devices, such as direct area storage and network-based storage devices, were traditionally used for data storage, the explosion of data being generated, processed and used led to cloud storage where different cloud service providers allow users to save large volumes of data in off-site locations that can be accessed through the internet or private networks. Cloud providers offer, among other services, globally distributed, horizontally partitioned, multi-model database services. Hybrid cloud storage combining public and private cloud components is also available. Data is recorded and stored by different cloud providers in different forms such as file storage, block storage, and object storage. Special tools may be needed to achieve interoperability between the different storage forms implemented by the cloud storage systems from different providers.

### BRIEF DESCRIPTION OF DRAWINGS

Features of the present disclosure are illustrated by way of examples shown in the following figures. In the following figures, like numerals indicate like elements, in which:
FIG. 1 shows a block diagram of a heterogeneous cloud environment including a native cloud storage system and an external cloud storage system in accordance with an embodiment of the present disclosure.
FIG. 2A shows a block diagram of an adapter apparatus in accordance with an embodiment of the present disclosure.
FIG. 2B shows a block diagram of various virtualization operators of the adapter apparatus in accordance with an embodiment of the present disclosure.
FIG. 3 shows a block diagram of a catalog-based adapter in accordance with an embodiment of the present disclosure.
FIG. 4 shows a block diagram of a model-based adapter in accordance with an embodiment of the present disclosure.
FIG. 5 shows a flowchart of a method of setting properties in accordance with an embodiment of the present disclosure.
FIG. 6 shows a flowchart of a method of setting cache properties of the mounted data in accordance with an embodiment of the present disclosure.
FIG. 7 shows a flowchart of a method of enabling leases on resources accessed from an external cloud storage system in accordance with an embodiment of the present disclosure.

### DETAILED DESCRIPTION

For simplicity and illustrative purposes, the principles of the present disclosure are described by referring mainly to embodiments and examples thereof. In the following description, numerous specific details are set forth in order to provide an understanding of the embodiments and examples. It will be apparent, however, to one of ordinary skill in the art, that the embodiments and examples may be practiced without limitation to these specific details. In some instances, well-known methods and/or structures have not been described in detail so as not to unnecessarily obscure the description of the embodiments and examples. Furthermore, the embodiments and examples may be used together in various combinations. Throughout the present disclosure, the terms "a" and "an" are intended to denote at least one of a particular element. As used herein, the term "includes" means includes but not limited to, the term "including" means including but not limited to.

An adapter apparatus that generates transformed messages based on storage hierarchies of corresponding cloud storage systems in a heterogeneous cloud storage environment is disclosed. The heterogeneous cloud storage environment includes a native cloud storage system and one or more external cloud storage systems implementing different storage formats such as a file storage system, a block storage system, an object storage system, etc. The native cloud storage system includes an adapter apparatus that transforms or converts native data requests into transformed data requests that are targeted for data plane or control plane operations on external cloud storage systems. The external cloud storage system receives the converted native data requests and may not include the adapter apparatus. Conversely, the adapter apparatus also converts external responses originating from the external cloud storage system into transformed responses that are executable on the native cloud storage system. The external cloud storage system is a cloud storage system different from the native cloud storage. The native cloud system and the external cloud system may be provided by different cloud storage system providers or may be provided by the same cloud storage system provider.

The adapter apparatus transforms the communications into formats executable on the corresponding cloud storage systems based on the storage hierarchy implemented by the cloud storage systems. The native data request can include an input that indicates that an external storage hierarchy of the external cloud storage system is defined by the user. Alternately, the adapter apparatus can determine the external storage hierarchy by accessing an external metadata catalog which includes information regarding the external cloud storage system. If neither of the above methods is applicable, the adapter apparatus determines the external storage hierarchy using a machine learning (ML) model on the data structure(s) obtained from the mounted data accessible in response to the native data request. Based on the determination of the external storage hierarchy, a corresponding adapter of a set of stored adapters is selected for the transformations. The set of stored adapters includes a catalog-based adapter, a model-based adapter, and a user-customizable adapter.

The adapter apparatus processes a message to be transformed e.g., a native data request using techniques such as Natural Language Processing (NLP), for inferring path hierarchy. For example, a get file request framed as:
"GET sales%20report%20from%20S3%20for%20the%20last%20quarter->" can be translated to a path:
"GET https://S3.amazonaws.com/mycompany/2024/Q1/sales.pdf'.

Similarly, in another example, a request for a list of items framed as: "GET last%20birthday%27s%20beach%20pictures?recursive=True -> Get" can be translated into the corresponding path as detailed herein.

The set of stored adapters affects different types of transformations which include a one-to-one mapping, a default value transformation, and a derived value transformation. A one-to-one mapping accesses the external metadata catalog and/or rules from a rules file to identify the elements used in the external cloud storage system that correspond to elements of the native data request hence, effecting a transformation by replacing the corresponding elements. A default value transformation substitutes default values specified in the rules for any parameters that are not provided with values. A derived value transformation calculates or logically derives values based on one or more of the information from the external metadata catalog, rules, and programmatic instructions.

In an example, the transformed output from the selected adapter includes mounted data provided by the external cloud storage system responsive to the native data request. The adapter apparatus enables various operations to be executed on the mounted data. Certain operations that are supported by the native cloud storage system but are not supported by the external cloud storage system are also enabled on the mounted data accessed from the external cloud storage system. Examples of such operations include but are not limited to cache control, property virtualization, and enabling leases on resources of the external cloud storage system accessed via the transformed communications. The operations are enabled by defining augmented metadata for the mounted data.

The disclosed adapter apparatus provides a technical solution to a technical problem of enabling access to multiple different kinds of storage systems from a native cloud storage system by allowing for translations of behaviors of the various systems. The adapter apparatus allows the translation of semantic behaviors to be defined declaratively and through various types of transformations outlined herein. The adapter apparatus therefore provides for a flat system that can be mapped to a hierarchical system by declaring/implementing equivalent concepts. Furthermore, the adapter apparatus provides the flexibility to change the declarative translation and connect to different types of systems, for example, via user-defined adapters. By providing for augmented metadata, the adapter apparatus facilitates augmenting the state of objects so that the adapter apparatus allows behaviors to be implemented that require keeping a state that is not supported by the underlying file system (e.g. if the external cloud storage system does not support eTags). Thus, the adapter apparatus permits non-hierarchical or different hierarchical storage systems to be used as if they were part of a hierarchical storage system.

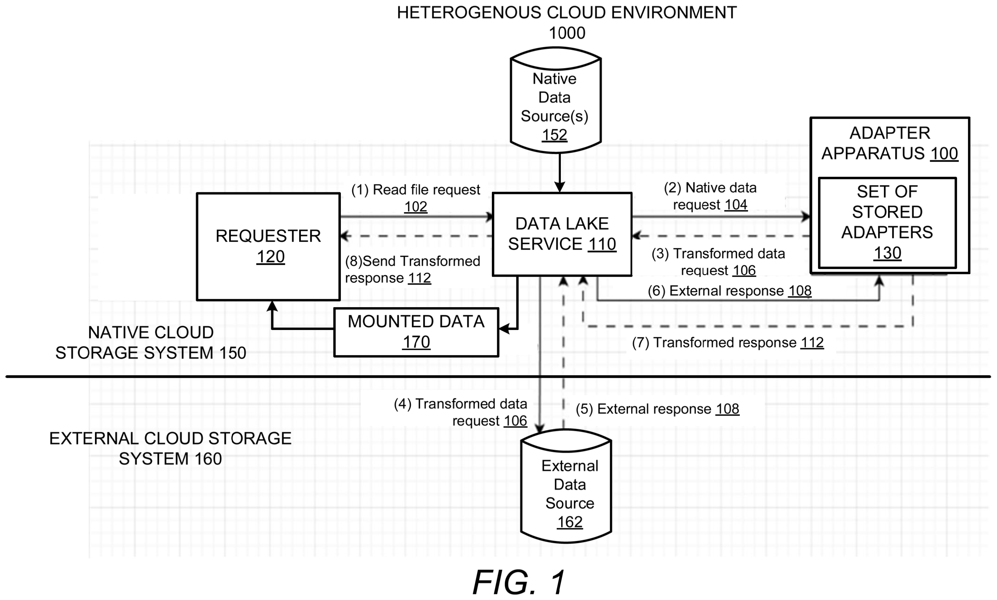

FIG. 1 shows a block diagram of a heterogeneous cloud environment 1000 including a native cloud storage system 150 and an external cloud storage system 160 in accordance with an embodiment of the present disclosure. The native cloud storage system 150 and the external cloud storage system 160 associated with a native data request 104 can have different storage hierarchies hence forming the heterogeneous cloud environment 1000. For example, the native cloud storage system 150 can implement a multi-level native storage hierarchy while the external cloud storage system 160 implements a single level or a flat file storage hierarchy. An alternative arrangement is also possible where the native cloud storage system 150 implements a single-level native storage hierarchy while the external cloud storage system 160 implements a multi-level storage hierarchy. Another alternative arrangement is also possible where the native cloud storage system 150 and the external cloud storage system 160 implement different types of hierarchies in their hierarchical storage systems.

A hierarchical storage system stores files on a computer in a tree-like structure using parent-child relationships, e.g., where each directory can contain subdirectories and files. The top-level directory is known as the root directory, and all other directories are considered children of the root directory. In addition to file storage, other types of storage systems that can be implemented in the heterogeneous cloud environment 1000 include block storage, object storage, etc. Block storage breaks a file into chunks or blocks of data and stores each block separately under a unique address. Unlike the hierarchical file storage system, a block storage system does not implement a rigid directory, subdirectory, or folder structure. Rather, blocks can be stored anywhere in the system. For example, for a file system that is hierarchical, a data file can be stored in discrete blocks throughout the file system. A file can be accessed by the server's operating system using the unique addresses to pull the blocks back together into the file. An object storage system includes objects which are discrete units of data that are stored in a structurally flat data environment. Again, there is no defined hierarchy in the object storage system. Instead, each object is a self-contained repository that includes the data, and corresponding metadata (descriptive information associated with an object), identified by a unique identifier (unique ID) such as a file number or a file pathID or some other type of identifier, which may be a unique path. The unique ID enables an application to locate and access the object. As mentioned herein the native cloud storage system 150 and the external cloud storage system 160 can each implement any of the aforementioned storage systems.

The native cloud storage system 150 includes an adapter apparatus 100, a data lake service 110 that enables user devices to interact with various data sources not only in the native cloud storage system 150 but other cloud platforms such as the external cloud storage system 160. The data lake service 110 manages a centralized repository that stores, processes, and secures large amounts of structured, semi-structured, and unstructured data in native format. The native data sources 152 in the native cloud storage system 150 and external data sources 162 in the external cloud storage system 160 store data or implement file systems having different hierarchical formats which can include single-level or multi-level hierarchies. By way of illustration and not limitation, the native cloud storage system 150 can include Azure Data Lake Storage (ADLS) and the external cloud platform can include Amazon Simple Storage Service (Amazon S3).

When a requester 120 issues (1) a request for a data operation execution, e.g., a read file request 102 to the native cloud storage system 150, the data lake service 110 receives the read file request 102. In an example, the requester 120 issuing the read file request 102 can be an application running on the native cloud storage system 150. The data lake service 110 sends (2) a native data request 104 to the adapter apparatus 100 based on the read file request 102. The adapter apparatus 100 determines if the read file request 102 can be serviced from the native data sources 152 of the native cloud storage system 150 or if the data sources from other cloud platforms e.g., the external cloud storage system 160 are to be accessed. In an example, the format of the read file request 102 is based on a native hierarchy of a file system implemented by the native cloud storage system 150. The read file request 102 can be analyzed via string and/or NLP to make the determination regarding the cloud platform pertaining to the read file request 102.

If it is determined that the read file request 102 is to be executed on the external cloud storage system 160, the adapter apparatus 100 transforms the native data request 104 to generate a transformed data request 106 using one of a set of stored adapters 130. In different examples, an adapter can include a code module, a library of code modules/functions, or one or more Application Programming Interfaces (APIs) that transform requests, commands, or other requestor communications originating in the native cloud storage system 150 for execution on a different cloud storage system (e.g., the external cloud storage system 160) which implements a different data hierarchy for the corresponding external file system than the native cloud storage system. The set of stored adapters 130 implements one of the multiple types of inferences for transforming native data requests in accordance with corresponding hierarchies of the external cloud storage systems. Based on the selected inference/adapter, the adapter apparatus 100 adapts or transforms the elements specified in the native data request 104 to corresponding elements of the external data source 162 in the external cloud storage system 160. The transformed data request 106 is provided (3) to the data lake service 110 which in turn transmits (4) the transformed data request 106 to the external data source 162 in the external cloud storage system 160.

The external data source 162 provides (5) an external response 108 which may or may not include the requested data. In either case, the external response 108 is formatted in accordance with the external hierarchy implemented by the file system of the external data source 162. The data lake service 110 receives the external response 108 and forwards (6) the external response 108 to the adapter apparatus 100. The adapter apparatus 100 again determines one of the set of stored adapters 130 for transforming the external response 108 into a transformed response 112. The transformed response 112 is generated by mapping the elements of the external response 108 to corresponding elements of the native format. The transformed response 112 is provided (7) to the data lake service 110 which forwards (8) the transformed response 112 to a device associated with the requester 120. The transformed response 112 enables access to any data requested initially in the read file request 102. The requested data is provided as mounted data 170 to the requester 120.

Further operations can be executed on the mounted data 170 as disclosed herein. Depending on the user rights associated with the requested data, the mounted data 170 can be downloaded into the native cloud storage system 150 or the mounted data 170 is accessed directly from the external cloud storage system 160 by the requester 120. When storing locally within the native cloud storage system 150, by the requester 120, the adapter apparatus 100 can splice the hierarchies of the native cloud storage system 150 and the external cloud storage system 160 allowing seamless navigations and operations across different cloud storage systems with different hierarchies. For example, when storing the mounted data 170 within the native cloud storage system 150, the adapter apparatus 100 splices a portion of an external path of the mounted data 170 to a native path defined by the native cloud storage system 150 and sets a path to a locally-stored version of the mounted data 170 based on the splicing. The adapter apparatus 100 thus enables mounting data (e.g., folders, files, etc.,) from multiple heterogenous cloud storage systems, e.g., more than one external cloud storage system to the native cloud storage system 150 and splice them into one target file system. For example, a hierarchical structure from one cloud storage system can be used by the native cloud storage system 150 to arrange and store data from another cloud storage system. The adapter apparatus 100 can establish multiple hierarchical paths for a single file so that the same file appears at multiple levels of a hierarchy.

A further application for the adapter apparatus 100 involves a copy from the Universal Resource Locator (URL) operation. In the copy from URL operation, the native cloud storage system 150 enables downloading and storing data from a website using the website URL e.g., someURL.com. If the copy from URL function is not supported by the external cloud storage system 160, then the data can be downloaded and stored by the adapter apparatus 100 as described above as part of the mounted data 170. If combined with the splicing operation, the downloaded data can further be provisioned with a hierarchy thus combining multiple operations.

In an example, authentication and authorization steps are included so that when the read file request 102 is received (1) it is initially determined that the user is authorized to access the requested data by the data lake service 110 before the native data request 104 corresponding to the read file request is sent (2) to the adapter apparatus 100. Also, it can be appreciated that only one external cloud storage system 160 is shown for simplicity and that the native cloud storage system 150 can be connected to multiple external cloud data storage systems having different types of hierarchies. Accordingly, the set of stored adapters 130 of the adapter apparatus 100 can determine the different hierarchies and enable the transformation of native data requests for execution on the different cloud storage systems in accordance with the corresponding hierarchies. Similarly, the adapter apparatus 100 also enables the native cloud storage system to receive responses from the various cloud storage systems with different hierarchies and transform the responses into a native response in accordance with the native data hierarchy so that the native responses can be processed in the native cloud storage system 150.

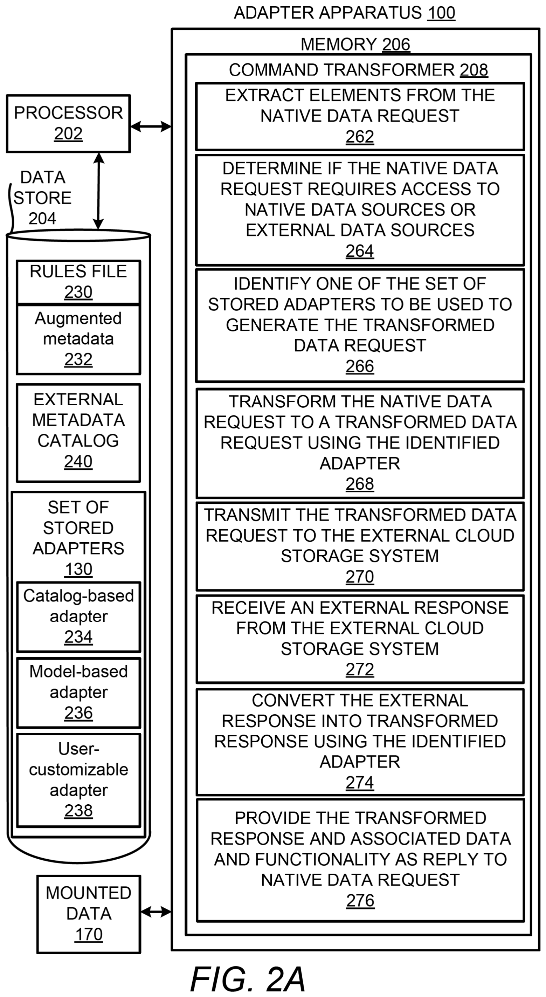

FIG. 2A shows a block diagram of the adapter apparatus 100 in accordance with an embodiment of the present disclosure. The adapter apparatus 100 includes a processor 202, a data store 204, and a memory 206. The memory 206 has stored thereon a command transformer 208 which further includes machine-readable instructions 262-276 that the processor 202 is to execute. Although the instructions 262-276 are described herein as being stored on the memory 206 and thus include a set of machine-readable instructions, the adapter apparatus 100 may include hardware logic blocks that may perform functions similar to the instructions 262-276. For instance, the processor 202 may include hardware components that may execute the instructions 262-276. In other examples, the adapter apparatus 100 may include a combination of instructions and hardware logic blocks as shown in FIG. 2A to implement or execute functions corresponding to the instructions 262-276. In any of these examples, the processor 202 may implement the hardware logic blocks and/or execute the instructions 262-276. As discussed herein, the adapter apparatus 100 may also include additional instructions and/or hardware logic blocks such that the processor 202 may execute operations in addition to or in place of those discussed above with respect to FIG. 1.

The processor 202 is a semiconductor-based microprocessor, a central processing unit (CPU), an application-specific integrated circuit (ASIC), a field-programmable gate array (FPGA), and/or other may be termed a computer-readable medium and is, for example, a Random Access memory (RAM), an Electrically Erasable Programmable Read-Only Memory (EEPROM), a storage device, or the like. In some examples, the memory 206 is a non-transitory computer-readable storage medium, where the term "non-transitory" does not encompass transitory propagating signals. In any regard, the memory 206 has stored thereon machine-readable instructions executable by the processor 202. Similarly, the data store 204 may be a Random Access Memory (RAM), an Electrically Erasable Programmable Read-Only Memory (EEPROM), a storage device, or the like.

The data store 204 stores the set of stored adapters 130 that enable the transformation of the requests and responses into appropriate formats based on the hierarchies of the corresponding cloud storage system(s) involved in the interaction. The set of stored adapters 130 can include a catalog-based adapter 234, a model-based adapter 236, and a user-customizable adapter 238. The user-customizable adapter 238 enables users to provide declarative translations that connect to different cloud storage systems. Furthermore, the user-customizable adapter 238 also receives user-defined naming patterns. For example, a file named 'Family_2023_Q1_Jan_beach123.jpg' can be stored in a user-defined path e.g., bucket1/folder1/.... In this example, the native request can be formatted as: ListFiles workspace1/lakehouse1/PicturesToBeAnalyzed/Family/2023/Beach, where the request is specifying a hierarchy, which needs to be inferred from the flat underlying external storage system. Similarly, the external storage system can contain a hierarchy ex: PersonalPictures/2023/Q1/Jan/Beach/123.jpg and a native request could look like: ReadFile workspace1/lakehouse1/PicturesToBeAnalyzed/Family_2023_Q1_Jan_beach123.jpg, where the request is not specifying the hierarchy, which can be inferred by the adapter to expand into a hierarchy. Also, the native request could contain a hierarchy ex: personal pictures/petAdopted/winter/Fun/123.jpg, which is a different hierarchy from the one stored in the external storage system ex: PersonalPictures/2023/Q1/Jan/Beach/mydog.jpg.

As detailed *infra,* the set of stored adapters 130 are configured to execute three types of transformations, including a one-to-one mapping, default value transformations, and derived value transformations. The machine-readable instructions in the set of stored adapters 130 are executed by the processor 202 in conjunction with mapping and transformation rules included for example, in a JavaScript Object Notation (JSON) file e.g., a rules file 230. The rules file 230 also provides for augmented metadata 232 which provision for semantics/operations on the mounted data 170 which are otherwise unavailable on the external cloud storage system 160. An example of operations enabled by the augmented metadata 232 on the mounted data 170 includes maintaining state information of the mounted data 170 in the native cloud storage system 150. For example, metadata regarding a change to the mounted data 170 can be stored in the augmented metadata 232 as augmented state information so that subsequent inquiries regarding the state of mounted data 170 can be handled based on the augmented state information stored in the native cloud storage system 150 without having to contact the external cloud storage system 160.

Below are some example entries of the rules file 230:

| **Field** | **Description** | **Example** |
|---|---|---|
| Operation Name | Json file supports multiple operations. For each operation, the request and response mappings will differ | GetPathProperties, ReadFile, ListDirectory etc. |
| Request | An object that contains the rules for converting the ADLS request to the external request | {"Request": {...}} |
| Response | An object that contains the rules for converting the external response to the ADLS response | {"response": {...}} |
| adlsHeaderName | A string that specifies the name of the request or response parameter | {"adlsHeaderName": "x-ms-range"} |
| externalRESTPropertyName | A string that specifies the name of the external property while making Rest Calls | "externalRESTPropertyName" : "Range" |
| externalsourceSD KProperty Name | A string that specifies the name of the external property while using external source SDK Calls such as S3Client | "externalSourceSDKPropertyName": "ByteRange" |
| defaultValue | A string that specifies the default value to be set when none is set | "defaultValue": " *,Authorization" |
| customSetter | A function name that need to be called to set the header value | "customSetter": "SetMsErrorCode" |

The processor 202 executes instructions 262 that extract elements of the native data request 104. Elements can be extracted by the instructions 262 using NLP techniques. The processor 202 executes instructions 264 that determine the data sources to be accessed by the native data request 104 from the data lake services 110 for a data operation execution. A determination is made as to whether the native data request 104 is to access data or execute other data operation from a native data source of the native cloud storage system 150 or whether the native data request 104 requires access to an external data source e.g., the external data source(s) 162 hosted on the external cloud storage system 160 for executing a data operation. In an example, the native data request 104 can be analyzed (e.g., parsed, tokenized, and compared with corresponding metadata) to identify the elements (e.g., tokens including discrete pieces of data/metadata) to determine the location where the data is stored and the data operations to be executed on the data. For example, an element can include a name-value pair of data/metadata included in the native data request 104 so that the element as a whole is meaningful within the context of the corresponding cloud storage system. If the native data request 104 is to access the native data source(s) 152, then the adapter apparatus 100 may execute the native data request 104 against the native data source 152 without generating a transformed data request.

If the native data request 104 requires access to the external data source(s) 162, the processor 202 executes instructions 266 that identify one of the set of stored adapters 130 to generate the transformed data request 106 from the native data request 104. Various factors associated with the native data request 104 can result in selecting one of the set of stored adapters 130. For example, the user-customizable adapter 238 can be selected via explicit user input specifying a user-defined hierarchy to be used, the catalog-based adapter 234 can be selected based on whether the adapter apparatus 100 can access the corresponding metadata catalog or the model-based adapter 236 can be selected based on particular data structures pertaining to the native data request 104.

The processor 202 executes instructions 268 that transform the native data request 104 into a transformed data request 106 by employing the identified adapter. Each of the set of stored adapters 130 is based on a corresponding type of inference. The user-customizable adapter 238 allows for a user to define the data hierarchy to be used on the external cloud storage system 160 by mapping the elements of the native data request 104 with user-defined naming patterns. The catalog-based adapter 234 enables the transformation based on the hierarchy information stored in an external metadata catalog 240 of the external cloud storage system 160. The external metadata catalog 240 includes information such as but not limited to, request and response parameters, default values to be used when no values are provided for a property, definitions of database objects such as base tables, views (virtual tables), indexes, user profiles, user groups, external properties names used for making Application Programming Interface (API) calls such as, Representational State Transfer (REST) calls, name of the external property used for making external source Software Development Kit (SDK) calls, etc. The hierarchy information in the external metadata catalog 240 is used to transform or convert elements specified in the native data request 104 to the corresponding elements of the external cloud storage system 160. Conversely, the external metadata catalog 240 also enables transforming messages formatted according to the external data hierarchy into messages based on the native data hierarchy. Again, only one external metadata catalog 240 is shown for simplicity. Several external metadata catalogs for different cloud storage systems can be stored so that native hierarchy-based communications can be transformed into communications formatted based on corresponding hierarchies. An augmented metadata 232 of the native cloud storage system 150 is also maintained for enabling various operations as will be detailed herein.

The model-based adapter 236 derives a data hierarchy from Machine Learning (ML) model outputs. The model-based adapter 236 employs different ML models to extract attributes of the data/data structures in the mounted data 170 accessed via the native data request 104. The extracted attributes are mapped to corresponding entries of the external metadata catalog 240 thereby deriving a data hierarchy of the external cloud storage system 160 based on the extracted attributes.

The processor 202 executes instructions 270 to transmit the transformed data request 106 to the external cloud storage system 160. The processor 202 executes instructions 272 to receive the external response 108 from the external cloud storage system 160 in reply to the transformed data request 106. As the external response 108 is generated in the external cloud storage system 160, the external response 108 will be formatted per the external data hierarchy implemented by the external cloud storage system 160. The processor 202 executes instruction 274 that convert the external response 108 formatted per the external data hierarchy into the transformed response 112 which is formatted per the native data hierarchy for execution on the native cloud storage system 150. Again, the instructions 272 cause the processor 202 to effect the transformation using the user-customizable adapter 238, catalog-based adapter 234, or the model-based adapter 236 as described above. Based on the instructions in the transformed response 112, the information/data therein e.g., the mounted data 170 can be provided to the requester 120, or further operations on the mounted data 170 can be executed as detailed herein by the processor 202 by executing instructions 276.

The following is an example of a portion of the JSON file that contains the rules for converting the ADLS requests and responses to the S3 requests and responses:

```
 "OperationName": "ReadPath",
 "Mapping": {
 "Request": {
 "Headers": [
 {
 "adlsHeaderName": "x-ms-range",
 "externalRESTPropertyName": "Range",
 "externalSourceSDKPropertyName": "ByteRange"
 },
 {
 "adlsHeaderName": "x-ms-range-get-content-crc64",
 "externalRESTPropertyName": "",
 "externalSourceSDKPropertyName": ""
 ]
 },
 "Response": {
 "Headers": [
 {
 "externalRESTPropertyName": "accept-ranges",
 "externalSourceSDKPropertyName": "AcceptRanges",
 "adlsHeaderName": "Accept-Ranges",
 "customSetter": "",
 "defaultValue": ""
 },
 {
 "externalRESTPropertyName": "",
 "externalSourceSDKPropertyName": "",
 "adlsHeaderName": "x-ms-resource-type",
 "customSetter": "SetResourceType",
 "defaultValue": ""
 },
 {
 "externalRESTPropertyName": "",
 "externalSourceSDKPropertyName": "",
 "adlsHeaderName": "x-ms-version",
 "customSetter": "",
 "defaultValue": "2021-12-02"
 }
 ]
 }
 }
```

In the above rules, "adlsHeaderName": "x-ms-range" is mapped to "externalRESTPropertyName": "Range" which enables copying data from ADLS to S3. In another example, "adlsHeaderName": "x-ms-resource-type" is mapped to "customSetter": "SetResourceType". Therefore, the headers of S3 are set as values via the customSetter function for 'x-ms-resource-type' which is indicative of a resource type such as a folder or file in ADLS. Similar mappings can be constructed for any request-response mappings between any two storage providers. Furthermore, various operations can be performed on the mounted storage system or the data from the external cloud storage system 160 accessed from the native cloud storage system 150. The operations include controlling cache behavior, virtualizing container properties, and copying data from a Universal Resource Locator (URL). These operations can be executed by issuing requests in a native format even if the external cloud storage system 160 does not support such operations via virtualization of operations using the augmented metadata 232.

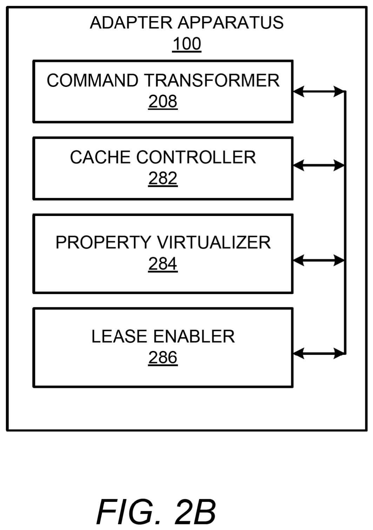

FIG. 2B shows a block diagram of various virtualization operators of the adapter apparatus 100 in accordance with an embodiment of the present disclosure. The output of the command transformer 208 is used by the various virtualization operators such as, a cache controller 282, a property virtualizer 284, and a lease enabler 286. The cache controller 282 allows specifying the cache behavior of the mounted data 170, such as whether to cache the mounted data 170 locally or remotely, the period of caching the mounted data 170, and how to refresh the cache. The cache controller 282 also provides a way to invalidate the cache when the mounted data 170 which is cached becomes stale, e.g., changes in the external cloud storage system 160. The property virtualizer 284 provides a way to set properties even though they are not supported by external cloud storage system 160 on the mounted storage systems, such as the operation timeout, default lease duration, etc. The lease enabler 286 provides a way to acquire and manage a lease on the mounted data 170 so that only the entity owning the lease (e.g., the requester 120) can access the external path for the duration of the lease as long as the access happens through the native cloud storage system 150.

It can be appreciated that functionalities of the cache controller 282, the property virtualizer 284, and the lease enabler 286 can be combined so that a single operation involves functionality of two of the virtualization operators of the adapter apparatus 100. Some examples of such combinations will be discussed *infra.*

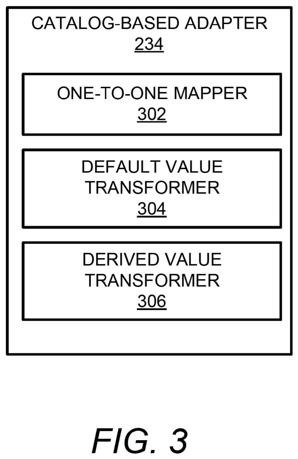

FIG. 3 shows a block diagram of the catalog-based adapter 234 in accordance with an embodiment of the present disclosure. The catalog-based adapter 234 includes a one-to-one mapper 302, a default value transformer 304, and a derived value transformer 306. The one-to-one mapper 302 can include machine-readable instructions that cause the processor 202 to effect the transformation of request elements from the native format to the external format e.g., by changing a name of a request parameter from the native storage hierarchy to an equivalent name in the external storage hierarchy. For example, the ADLS header key If-Match can be mapped to the equivalent S3 Bucket header. The value can be copied as it is. The default value transformer 304 includes machine-readable instructions that assign a default value to any parameter if it is not provided by the requester 120. Referring again to the example of ADLS as the native cloud storage system 150 and S3 as the external cloud storage system 160, if the requester 120 does not provide the header Access-Control-Expose-Headers parameter in the read file request 102, the parameter will be added to the headers of the transformed response 112 with a default value. Similarly, if the read file request 102 does not does not specify the FileSystem parameter in the ADLS read file request 102, the default value transformer 304 can assign a default value of "*, Authorization" to the FileSystem parameter in the native data request 104.

The derived value transformer 306 includes machine-readable instructions that when executed by the processor 202 calculate a value for a request or response parameter based on custom logic. Referring again to the example of ADLS as the native cloud storage system 150 and S3 as the external cloud storage system 160, ADLS expects the x-ms-resource-type to be set as a directory or file. Since S3 doesn't support this, the derived value transformer 306 will check all the header values from S3 and derive whether the object i.e., the resource type is equivalent to a folder or file, and the value is set accordingly.

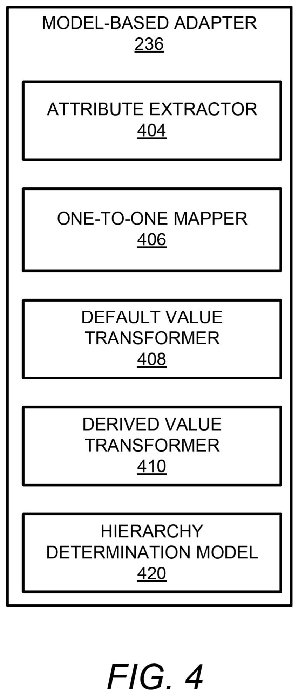

FIG. 4 shows a block diagram of the model-based adapter 236 in accordance with an embodiment of the present disclosure. The model-based adapter 236 can include an attribute extractor 404, a one-to-one mapper 406, a default value transformer 408, a derived value transformer 410, and a hierarchy determination ML model 420. The elements of the native data request 104 can include or may refer to a data structure e.g., an image, a text file, etc., which is to be analyzed to extract the elements of the native data request 104.

One or more of a plurality of ML models such as but not limited to You Only Look Once (YOLO)v8 Classification, Contrastive Language-Image Pre-Training (CLIP), Vision Transformer, etc., can be specified e.g., by users to be the hierarchy determination ML model 420 that determines the hierarchy from the data (ex: images), and specify a format to interpret the hierarchy from the determined tags (ex: tags for an image can be of the form Animals; Mammals; Whale and users can specify ";" as the delimiter). The adapter apparatus 100 can then use the combination of the tags generated by the hierarchy determination ML model 420 and the format specified by the user to determine the hierarchy. The plurality of models can also include text-analysis models for extraction of textual attributes. Based at least the corresponding type(s), the elements (which may include data structures such as images or text blocks) of the native data request 104 are analyzed by the selected model(s). The model outputs including features of the data structures are provided to the attribute extractor 404 which transforms or extracts attributes from the features. The one-to-one mapper maps the features to the requisite elements for framing the transformed data request 106. Values which are not filled by the one-to-one mapper 406 can be provided by the default mapper 406 or the derived value transformer 410 as detailed herein. The native data request 104 or the external response 108 is thus respectively converted into the transformed data request 106 or the transformed response 112. For example, the native cloud storage system 150 can implement hierarchical data storage while the external cloud storage system 160 implements a single-level hierarchy or a flat data storage format. Therefore, the attributes of a data structure are used to define various levels of the hierarchy as required by the native cloud storage system 150 thereby transforming a flat data storage format of the data structure to a multi-level hierarchy.

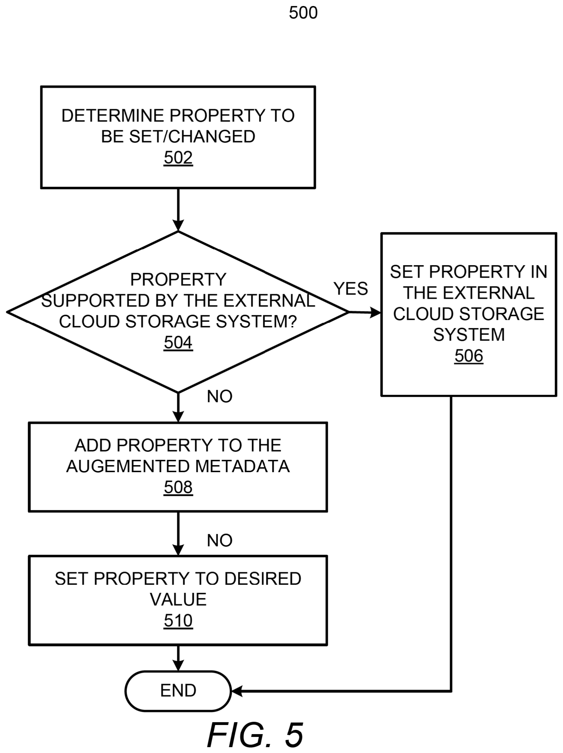

Various manners in which the processor 202 of the adapter apparatus 100 operates are discussed in greater detail with respect to the methods described in flowcharts 500-700 depicted in FIGs 5-7 below. It should be understood that the methods may include additional operations and that some of the operations described therein may be removed and/or modified without departing from the scope of the methods. The description of the methods is made with reference to the features depicted in FIGS. 1 through 4 for purposes of illustration.

FIG. 5 shows flowchart 500 of a method of setting properties unsupported by the external cloud storage system 160 in accordance with an embodiment of the present disclosure. In an example, the method of the flowchart 500 is implemented by the property virtualizer 284. The method starts at 502 wherein the adapter apparatus 100 determines that a property is to be set or changed from the native data request 104 and/or the transformed data request 106 using text analysis techniques as described above. At 504, the property virtualizer 284 determines if the property is supported by the external cloud storage system 160 based for example, on the information in the external metadata catalog 240. If yes, the property is set in the external cloud storage system 160 at 506. If at 504, the property virtualizer 284 determines that the property is not supported by the external cloud storage system 160, a definition of the property is added to the augmented metadata 232 at 508. At 510, the property virtualizer 284 manipulates or sets the property value for the mounted data 170 on the native cloud storage system 150. For example, properties such as operation timeout or default lease duration, etc., can be set or reset by the property virtualizer 284 in the augmented metadata 232.

The property virtualizer 284 also enables control plane operations such as creating a folder/file or other data management, routing, and processing operations, and data plane operations such as reading the contents, listing a folder, getting the metadata properties etc. The property virtualizer 284 also performs various tasks such as data ingestion, transformation, analysis, and visualization using the native file system operations. This makes the transformations that are required to provide a uniform interface, transparent to the end user. For example, a user who is an expert on the native cloud storage system 150 e.g., ADLS file system commands, need not learn additional new commands to use the external cloud storage system 160, thus accelerating the usage.

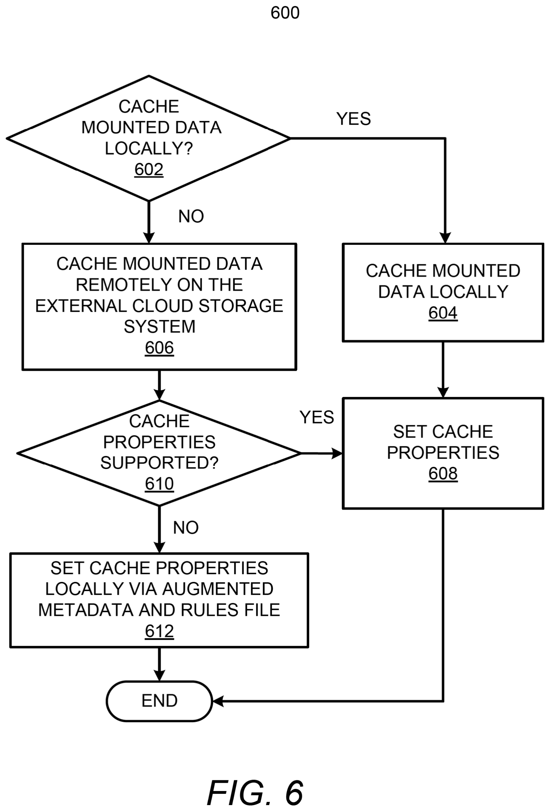

FIG. 6 shows a flowchart 600 of a method of setting cache properties of the mounted data 170 in accordance with an embodiment of the present disclosure. When the mounted data 170 is accessed, the requester 120 can cache the mounted data 170 either locally in the native cloud storage system 150 or remotely on the external cloud storage system 160. If, upon analysis of the native data request 104, it is determined at 602 that the mounted data 170 is to be cached locally, the mounted data 170 is downloaded into a cache corresponding to the virtual machine (not shown) of the requester 120 at 604 and the cache properties are set accordingly at 608. In case, it is determined at 602 that the mounted data is to be cached in the external cloud storage system 160, the mounted data 170 is cached in the external cloud storage system 160 at 606. It is further determined at 610 if any cache properties required by the native data request 104 which are supported by the native cloud storage system 150 but are not supported by the external cloud storage system 160.

If the required cache properties are supported by the external cloud storage system 160 then such properties are set directly based on the native data request 104 or subsequent transformed data requests on the mounted data at 608. If however, there are cache properties to be set based on the native data request 104 or subsequent commands from the requester 120 which are unsupported by the external cloud storage system 160, such properties are set at 612 via mappings in the augmented metadata 232 based on the rules in the rules file 230. For example, if the cache is to be refreshed after a certain time, then a new transformed data request may be automatically fired by the adapter apparatus 100 and the data in the cache is replaced with data obtained from the external cloud storage system 160 in response to the new transformed data request. In another example, if a cache expiry time is unsupported by the external cloud storage system 160 then the adapter apparatus 100 may delete the cache and disallow further access to the cached data automatically for users of the native cloud storage system 150.

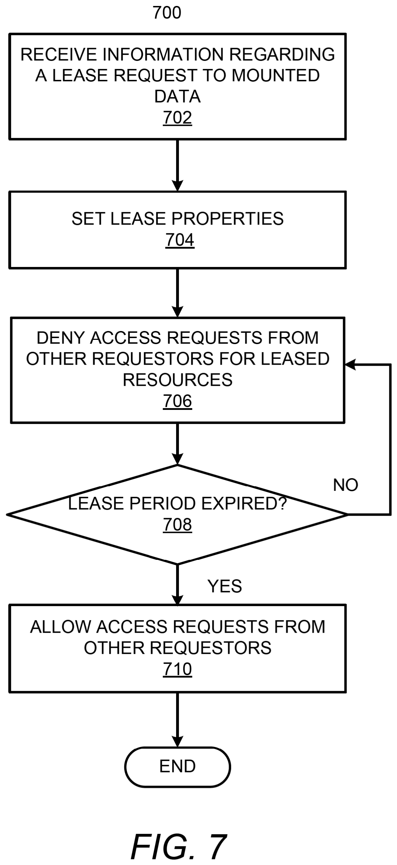

FIG. 7 shows a flowchart 700 of a method of enabling leases on resources accessed from the external cloud storage system 160 as implemented by the lease enabler 286 in accordance with an embodiment of the present disclosure. The method begins at 702 with the lease enabler 286 receiving information regarding a lease request from the requester 120. The lease request can be included initially in the native data request 104 or in other subsequent requests. Based on the external cloud storage system 160 support for leases, the lease enabler 286 sets lease properties at 704 from the external metadata catalog 240 if leases are supported or the augmented metadata 232 if leases are not supported. For example, if the leases are supported, the lease duration can be set according to the external cloud storage system 160, else the lease duration can be set by the native cloud storage system 150 in the augmented metadata 232. At 706, the lease enabler 286 denies subsequent access requests from other requestors to the mounted data 170 for the duration of the lease. At 708, the lease enabler 286 determines if the lease period has expired, using for example, an internal clock or counter. If the lease enabler 286 determines at 708 that the lease period has expired, then the lease enabler 286 allows other requestors to access the mounted data 170 at 710. If the lease enabler 286 determines at 708 that the lease period has not expired, then the lease enabler 286 returns to 706 to continue denial of access requests from other requestors to access the mounted data 170.

Although described specifically throughout the entirety of the instant disclosure, representative examples of the present disclosure have utility over a wide range of applications, and the above discussion is not intended and should not be construed to be limiting, but is offered as an illustrative discussion of aspects of the disclosure.

What has been described and illustrated herein is an example of the disclosure along with some of its variations. The terms, descriptions, and figures used herein are set forth by way of illustration only and are not meant as limitations. Many variations are possible within the scope of the disclosure, which is intended to be defined by the following claims - - and their equivalents -- in which all terms are meant in their broadest reasonable sense unless otherwise indicated.

## Claims

1. An apparatus, comprising
a processor; and
a memory on which are stored machine-readable instructions that when executed by the processor, cause the processor to:
determine that a native data request received at a native cloud storage system pertains to data operation execution on an external cloud storage system;
determine if an external storage hierarchy implemented on the external cloud storage system can be derived from one of the native data request and an external metadata catalog;
identify an adapter to transform the native data request to be executable by the external cloud storage system based on the determination regarding the external storage hierarchy;
transform, by the adapter, the native data request to a transformed data request executable by the external cloud storage system,
wherein the transformed data request is formatted in accordance with the external storage hierarchy; and
transmit the transformed data request for execution by the external cloud storage system.

2. The apparatus of claim 1, wherein to identify the adapter, the machine-readable instructions further cause the processor to:
select a user-customizable adapter for the transformation if the native data request includes an input that requires a user to define the external storage hierarchy of the external cloud storage system.

3. The apparatus of claim 2, wherein to transform, by the user-customizable adapter, the machine-readable instructions further cause the processor to:
map by the user-customizable adapter, a user-defined naming pattern to elements of the external cloud storage system.

4. The apparatus of one of claims 1 to 3, wherein to identify the adapter, the machine-readable instructions further cause the processor to:
select a catalog-based adapter from a set of stored adapters,
wherein the catalog-based adapter defines the external storage hierarchy based on an external metadata catalog of the external cloud storage system.

5. The apparatus of claim 4, at least one of:
wherein to transform, by the adapter, the machine-readable instructions further cause the processor to:
convert elements specified in the native data request to corresponding elements of the external cloud storage system based on information of the external storage hierarchy provided in the external metadata catalog and a rules file,
preferably wherein the elements in the rules file includes request and response parameters, external property names used for making Application Programming Interface (API) calls, default values to be used when values are not provided for properties; and
wherein the external metadata catalog further includes a custom setter function that enables defining levels of the external storage hierarchy.

6. The apparatus of one of claims 1 to 5, wherein the native cloud storage system implements a multi-level storage hierarchy and the external storage hierarchy includes a single-level storage format.

7. The apparatus of claim 6, wherein to identify the adapter, the machine-readable instructions further cause the processor to:
select a model-based adapter that derives levels of the multi-level storage hierarchy from an output of a Machine Learning (ML) model.

8. The apparatus of claim 7, wherein to transform the native data request, the machine-readable instructions further cause the processor to:
extract attributes of a data structure accessed in the native data request via the ML model; and
identify the levels of the multi-level storage hierarchy of the native cloud storage system based at least on the attributes.

9. The apparatus of one of claims 1 to 8, at least one of:
wherein the machine-readable instructions further cause the processor to:
obtain an external response from the external cloud storage system on submission of the transformed data request to the external cloud storage system, wherein the external response is formatted in accordance with the external storage hierarchy;
adapt elements in the external response to elements of the native cloud storage system; and
generate a transformed response from the adaptation, wherein the transformed response conforms with a native storage hierarchy of the native cloud storage system; and
wherein to transform the native data request, the machine-readable instructions further cause the processor to:
execute one or more operations including:
changing a name of a request parameter from a native storage hierarchy of the native cloud storage system to an equivalent name in the external storage hierarchy,
assigning a default value to a request parameter with a missing value, and
calculating a value for a request parameter based on a logic.

10. A processor-executable method comprising:
receiving, by a processor, an external response from an external cloud storage system in reply to a native data request from a native cloud storage system;
identifying, by the processor, an adapter that transforms the external response to a transformed response based on an external storage hierarchy of the external cloud storage system;
transforming, by the processor using the adapter, elements specified in the external response to correspond to elements of the native cloud storage system based on the external storage hierarchy;
obtaining, by the processor, a transformed response from the adapter,
wherein the transformed response is formatted in accordance with a native storage hierarchy of the native cloud storage system; and
enabling, by the processor via the transformed response, execution of one of a control plane operation and a data plane operation on mounted data accessed from the external cloud storage system via the transformed response.

11. The processor-executable method of claim 10, wherein enabling the control plane operation further comprises:
defining, by the processor, based on the transformation, a property for the mounted data,
wherein the property is supported by the native cloud storage system and not supported by the external cloud storage system.

12. The processor-executable method of claim 11, at least one of:
wherein enabling the control plane operation further comprises:
leasing, by the processor, the mounted data in accordance with the native data request by disabling subsequent access to the mounted data on the native cloud storage system to another requestor and the property includes a lease period when the subsequent access is disabled; and
releasing, by the processor, the lease on the mounted data on expiration of the lease period; and
wherein enabling the control plane operation further comprises:
caching, by the processor, the mounted data on the native cloud storage system; and
setting, by the processor, a property for a cached version of the mounted data on the native cloud storage system wherein the property is not supported in the external cloud storage system.

13. The processor-executable method of one of claims 10 to 12, wherein enabling the data plane operation further comprises:
splicing, by the processor, at least a portion of an external path of the mounted data to a native path defined by the native cloud storage system; and
setting, by the processor, a path to a stored version of the mounted data based on the splicing.

14. A computer-readable medium on which is stored a plurality of instructions that when executed by a processor, cause the processor to:
determine that a native data request received at a native cloud storage system pertains to data operation execution on an external cloud storage system;
determine if an external storage hierarchy of the external cloud storage system can be derived from one of an input in the native data request and an external metadata catalog;
identify an adapter from a set of stored adapters based on the determination regarding the input and the external metadata catalog;
transform via the adapter, the native data request to a transformed data request executable on the external cloud storage system,
wherein the transformed data request is formatted in accordance with the external storage hierarchy; and
transmit the transformed data request for execution to the external cloud storage system.

15. The computer-readable medium of claim 14, at least one of:
wherein the instructions for identifying the adapter comprise further instructions that cause the processor to:
identify a catalog-based adapter from the set of stored adapters as the adapter for the transformation if the external metadata catalog pertaining to the external cloud storage system is accessible,
else
identify a user-customizable adapter from the set of stored adapters if the input specifies a user-defined hierarchy to be used; and
wherein the instructions for identifying the adapter comprise further instructions that cause the processor to:
identify a model-based adapter from the set of stored adapters for the transformation, wherein the model-based adapter that derives the external storage hierarchy from output of a machine-learning (ML) model.
